# EUROPEAN PATENT SPECIFICATION

(11) **EP 1 314 828 B1**
(45) Date of publication and mention of the grant of the patent: **12.09.2007**
(21) Application number: 02025313.4
(22) Date of filing: 13.11.2002
(51) Int. Cl.: E04B 5/23, E04B 1/16

(54) **Integral connector for composite constructions**
Einstückiges Verbindungselement für Verbundkonstruktionen
Connecteur intégral pour des constructions composites

(30) Priority: 21.11.2001 IT VR20010123
(43) Date of publication of application: 28.05.2003
(73) Proprietor: AL-FER S.r.l., 37033 Montorio, Verona (IT)
(72) Inventor: Zenari, Rino, 37030 Mizzole (Verona) (IT)
(74) Representative: Savi, Alberto

(56) References cited:
- EP-A- 0 432 484
- WO-A-01/81773
- WO-A-96/21778
- FR-A- 2 808 820
- US-A- 3 600 868
- US-A- 5 649 798

## Description

The present invention proposes a connector for wooden floors, lamellar beams or the like. The main feature of this connector is to be made as a one-piece body.

It is a new kind of dry connector for wood and concrete mixed structures. In particular, this connector is to be used to strengthen historic wooden floors but it can be used to reinforce also recent or new structures.

The present invention consists of a metal pin which is conceived in such a way as to permit a strong engagement in wood and this is the reason why no auxiliary stirrups are required while the solidarization of the connector with concrete is permitted by the adherence between the connector head and concrete. The connector head can be shaped like a hexagon or square or it can be a cut head or other suitable type of head depending on the requirements.

As is known, in the field of building and in particular for the reinforcement of wooden floor structures, lamellar beam structures or the like it is necessary to utilize connecting elements or connectors which connect the wooden support with the concrete cast on the upper floor surface.

Usually, the known beam connectors consist of a metal joint which is provided with an upper wider head. These connectors are inserted at the end of the installation of the structure in compliance with the plan of construction. The known connectors must be assembled and fixed in the beam by means of suitable special screws or nails.

In the second phase of the reinforcing process, an arc welded metal net or lath is positioned till reaching the ends of the beams. Then, a concrete slab of the wished thickness is cast. The choice of the slab thickness depends on the requirements.

However, the above technology gives rise to two main problems to be solved by the present invention: the former refers to the necessity of carrying out connectors which must engage the structure by means of special screws or nails or other similar engaging elements while the latter refers to the necessity of employing many workers for the installation of the connectors.

As a matter of fact, the installation of conventional connectors involves a series of laborious operations: firstly, it is necessary to make as many holes in the beam as the number of screws to be inserted; secondarily, the connectors must be inserted and fixed in the beam with a long laborious process owing to the insertion of several screws.

The above process is rather complex and laborious because it is necessary to insert a lot of connectors in each beam and there is a lot of beams in each floor and therefore, a great deal of labour and time is required to carry out this reinforcing process. Thus, the cost of the whole operation becomes too high.

As is known, in the market there are methods for solving the said problems, among which we find the technique explained in the patent FR-A-2 808 820, which describes the procedure for reinforcing roofs and presents the utilization of connectors with head and threaded screw, whose inner part has a taper section facing the connector lower end and whose outer part has a cylindrical section. This particular threaded pin conformation, even if it makes the screwing easier into the wood beams, it does not assure high tightness.

The Patent EP-A-0 432 484 describes a connector for reinforcing wood and concrete mixed building structures, showing, also in this case, a head and a threaded pin. The drawbacks of this device are the common structure of the threaded pin which does not assure high tightness and the lengthened conformation of the head does not permit a precise fixing of the metal net set before the concrete slab is poured.

The present invention refers to the aforesaid field and proposes to solve the foregoing problems through a self-engaging one-piece dry connector as claimed in claim 1 wherein the lower part of the connector has a thread in the form at a continuous screw in which the outer spiral of the screw shows a constant diameter, in contrast with the inner part of the screw groove, formed by the thread, which becomes deeper and deeper toward the free end of the connector.

An immediate evident advantage of the present invention is that it is no more necessary to make a series of holes in the beam for the insertion of the screws for the application of the joint. In our case, it is sufficient to make only one hole for the insertion of the self-supporting connector according to the present invention.

In this way, it is possible to save labour and money and the whole cost of the finished structure is much lower.

In addition, in the present solution it is not necessary to use resins or adhesive substances and this is important because the resistance to fire of such resins and adhesives is very low. In addition, it is difficult to dispose of these substances and/or to recover the installation.

Besides these advantages, the particular conformation of the threaded pin permits a high tightness, higher than the common known devices one.

All the above described aims and advantages are reached according to the present invention by means of a dry connector for wood and concrete mixed structures, wooden floors, lamellar beams or the like, characterized by the fact of being carried out as a one-piece body showing an engaging head and a catching screw to be fixed in the beam where the said screw shows a thread as a continuous screw in which the outer spiral of the screw shows a constant diameter, in contrast with the inner part of the screw groove, formed by the thread, which becomes deeper and deeper toward the free end of the connector.

Further features and details of the invention will be better understood from the following description given as a non-limiting example with reference to the accompanying drawings wherein:
- Figure 1 is a schematic front view of a dry connector according to the present invention;
- Figure 2 is a schematic view of the connector according to the invention showing a possible variant of the screw stem;
- Figure 3 is a schematic view of the connector according to the invention as applied to a wooden beam;
- Figures 4-8 are schematic views of the connector showing some of its possible variants.

With reference to the accompanying drawings, number 1 denotes a dry connector according to the present invention in general. This connector is designed to be inserted in wood and concrete mixed structures and is to be utilized in particular for interventions of reinforcement on historic wooden floors but it can be used to strengthen also recent or new structures.

In general, the connector 1 is made of a one-piece body and shows a head 2 shaped in a particular way as well as a screw stem 3. The length, shape and pitch of the screw stem depend on the kind of structure on which it is inserted.

The upper end of the shaped head 2 shows an essentially hexagonal shape or other suitable shape. Preferably, the head shows a lower narrower neck to anchor the concrete. Thus, the present invention permits a strong engagement of the wood as well as a solidarization with the concrete.

Figure 2 represents a variant of the connector in which the upper part or head shows a hexagonal shape, also where the threaded pin is connected and a more cutting thread is provided to permit a better engaging in the wood.

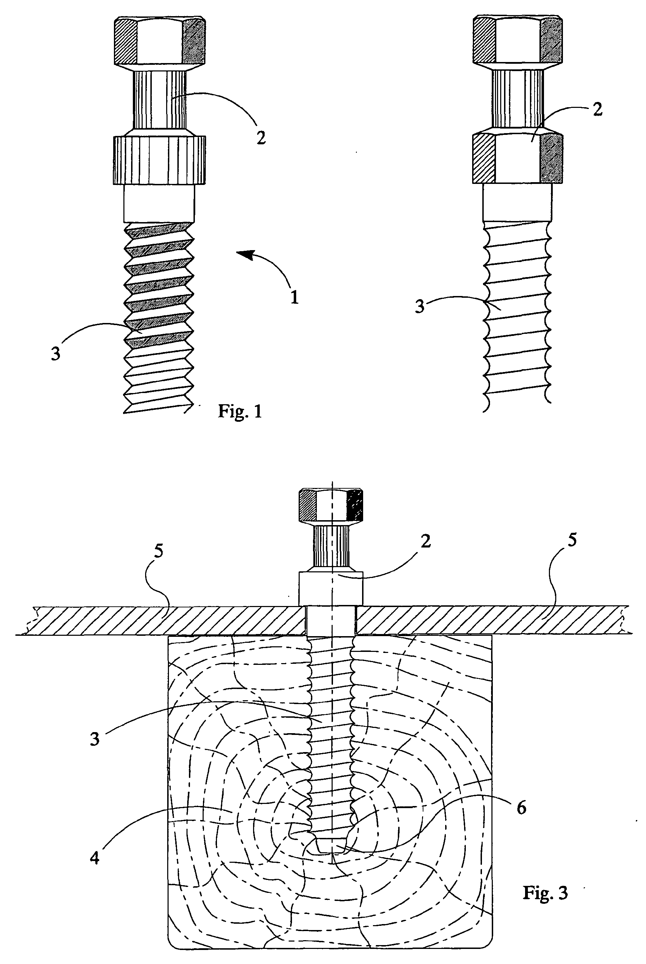

Figure 3 shows a connector as inserted in a beam 4 between the boards of a floor 5. From Figure 3 it appears clearly that it is sufficient to effect only a hole in the beam to insert the self-supporting stem. Then, the operator must simply screw the connector in the hole by means of a suitable spanner or an automatic screwing tool or the like.

In addition, the free end of the screw stem 3 shows a centering appendix 6 that centers the point of the beam where the connector must be inserted.

Once the connector has been inserted in the beam, the connector head that exits out of the floor boards is covered with concrete so that a perfect tightness is obtained.

The present connector makes it possible to carry out trusses and lamellar beams with or without glue because the so-described connector has a very resistant mechanical tightness.

Advantageously, the connector can be utilized according to different variants of use.

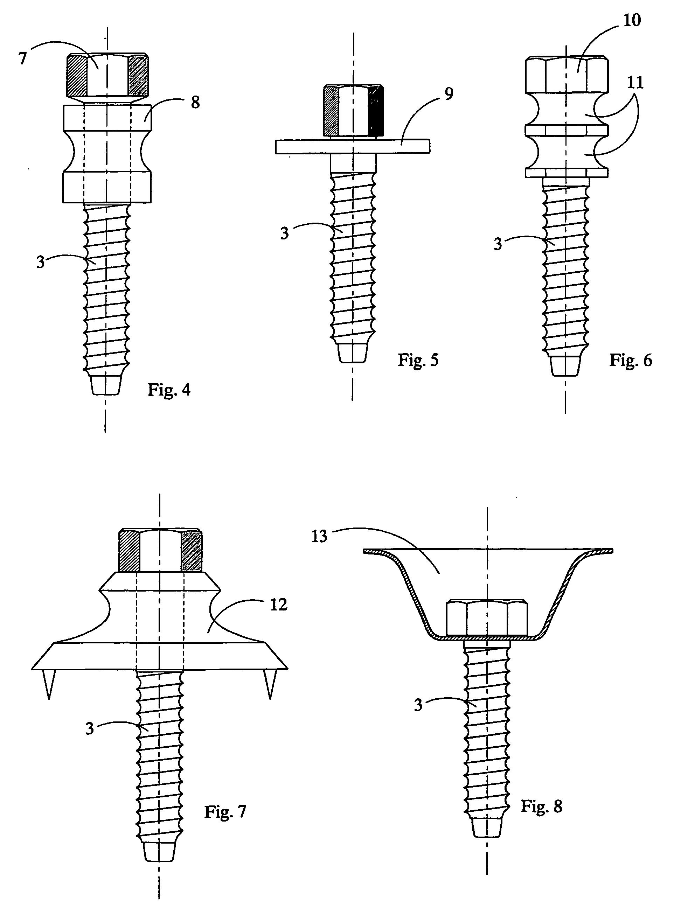

In Figure 4, a conventional screw 7 is represented as used with a washer 8.

In Figure 5, a screw is provided with a cross-pin 9 or a disc-shaped tight element that increases the capacity of the connector in respect to the beam and the concrete casting.

Figure 6 represents a variant in which the head 9 of the connector is provided with two tight grooves 11.

Finally, Figures 7 and 8 represent the possibility of applying additional elements 12 and 13 to the connector. The former is flared downward while the latter is flared upward. The flaring increases the capacity surface of the connecter.

The lower part of the connector is threaded as a continuous screw in which the outer spiral of the screw shows a constant diameter while the groove formed by the thread becomes deeper and deeper toward the free end of the connector so that an upturned cone is obtained.

Another feature of the connector according to the present invention is represented by the fact that it can be made of either a metal material or another suitable material such as wood, aluminium, plastic or PVC.

It is to be noted that the base of the shaped head 2 shows a projecting flat surface that projects in respect to the stem and permits a mechanical union between the boards and the beam.

It is evident that other several different constructive variants may be provided in the so-described connector and there are several different applications of the present connector that is applied to one-piece beams, lamellar beams or the like. In practice, the connector is utilized to reinforce mixed wood-concrete structures of historic, recent or new buildings.

However, any possible variant of this connector is to be considered as included in the scope of protection of the present invention as further described in the following claims.

## Claims

1. Dry connector (1) for wood (4,5) and concrete mixed building structures, in particular for a reinforcement of wooden floors, lamellar beams, and the like, realized as a one-body connector having a free end forming an engaging head (2) and a lower part forming a screw stem (3) intended to be screwed and fixed in the beam, **characterized in that the lower part of the connector** is threaded in the form of a continuous screw in which the outer spiral of the screw shows a constant diameter, while the groove, formed by the thread **becomes deeper and deeper toward the free end of the connector** so that an upturned cone is obtained
**and, in** the lower part of the connector, a threaded **pin (3)** as a continuous screw in which the outer spiral **(17)** of the screw shows a constant diameter, while the **inner part (18) of the screw** groove, formed by the thread, which becomes deeper and deeper toward the **head (2)** of the connector so that **a taper** is obtained.

2. Dry connector for building structures as claimed in claim 1, **characterized in that** the connector can be made of a metal material or another suitable material such as wood, aluminium, plastic or PVC.

## Patentansprüche

1. Trockenes Verbindungselement (1) für Holz (4,5)- und Betonverbundkonstruktionen, insbensondere für die Verstärkung von Holzfussboden, lamellare Träger und dergleichen, das als einstückiges Verbindungselement ausgebildet ist und ein freies Ende hat, das einen einsteckenden Kopf (2) bildet, und einen Unterteil hat, der einen Schraubenschaft (3) bildet, der in den Träger eingeschraubt und befestigt wird, **dadurch gekennzeichnet, dass** der Unterteil des Verbindungselements wie eine endlose Schraube gewindegeschnitten ist, wobei die äussere Schraubenspirale einen konstanten Durchmesser hat und die durch die Gewinde ausgebildete Nut zum freien Ende des trockenen Verbindungselements immer tiefer wird, sodass ein umgestürzter Kegel erhalten ist,
und im Unterteil des Verbindungselements ist ein Gewindebolzen (3) als eine endlose Schraube, wobei die äussere Schraubenspirale (17) einen konstanten Durchmesser hat, während der innere Teil (18) der durch die Gewinde ausgebildete Schraubennut zum Kopf (2) des Verbindungselements immer tiefer wird, sodass eine Verjüngung erhalten ist.

2. Trockenes Verbindugselement für Holz- und Betonverbundkonstruktionen nach Anspruch 1, **dadurch gekennzeichnet, dass** das Verbindungselement aus einem metallischen Material oder einem anderen geeigneten Material, wie Holz, Aluminium, Kunststoff oder PVC besteht.

## Revendications

1. Connecteur sec (1) pour des constructions composites en béton et bois (4,5), en particulier pour le renforcement de parquets, poutres lamellaires, et produits semblables, réalisé comme un connecteur intégral ayant une extrémité libre formant une tête d'embrayage (2) et une partie de dessous formant une tige à vis (3) que est vissée et fixée dans la poutre, **caractérisé par le fait que** la partie de dessous de le connecteur est filetée dans une forme à vis continue, dans lequel la spirale extérieure de la vis a un diamètre constant, alors que la rainure formée par le filet devient de plus en plus profonde vers l'extrémité libre du connecteur de sorte que un cône retourné est obtenu,
et dans la partie de dessous du connecteur il y a une cheville filetée (3) comme une vis continue, dans lequel la spirale extérieure (17) de la vis a un diamètre constant, alors que la partie intérieure (18) de la rainure à vis formée par le filet devient de plus en plus profonde vers la tête (2) du connecteur de sorte que un effilage est obtenu.

2. Connecteur sec pour des constructions composites selon la revendication 1, **caractérisé par le fait que** le connecteur peut être fait en un matériel métallique ou un autre matériel indiqué comme le bois, l'aluminium, la matière plastique ou le PVC.
